(19) Europäisches Patentamt
European Patent Office
Office européen des brevets

(11) Publication number: **0 319 757 B1**

(12) **EUROPEAN PATENT SPECIFICATION**

(45) Date of publication of patent specification: **06.04.94**

(51) Int. Cl.5: **A01N 43/08**, A01N 47/06

(21) Application number: **88119289.2**

(22) Date of filing: **21.11.88**

(54) **Insect attractant.**

(30) Priority: **07.12.87 US 129501**

(43) Date of publication of application:
**14.06.89 Bulletin 89/24**

(45) Publication of the grant of the patent:
**06.04.94 Bulletin 94/14**

(84) Designated Contracting States:
**AT BE CH DE ES FR GB GR IT LI LU NL SE**

(56) References cited:
**US-A- 4 087 525**
**US-A- 4 447 447**

**CHEMICAL ABSTRACTS, vol. 94, no. 23, 8th June 1981, page 163, abstract no. 186789h, Columbus, Ohio, US; M.G. KLEIN et al.: "Japanese beetle (Coleoptera: scarabaeidae): response to synthetic sex attractant plus phenethyl propionate: eugenol"**

**CHEMICAL ABSTRACTS, vol. 96, no. 5, 1st February 1982, page 198, abstract no. 29956j, Columbus, Ohio, US; & JP-A-81 133 201**

(73) Proprietor: **The Clorox Company**
**1221 Broadway**
**Oakland California 94612(US)**

(72) Inventor: **Minetti, Dawn Catherine**
**83 Yale Avenue**
**Wyckoff New Jersey(US)**

(74) Representative: **Smith, Sydney et al**
**Elkington and Fife,**
**Beacon House,**
**113 Kingsway**
**London WC2B 6PP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 319 757 B1

## Description

This invention relates to an attractant, for cockroaches. More particularly the invention relates to the use of a particular furanone derivative as an attractant for cockroaches, to a poison bait food composition containing said furanone and a method for destroying cockroaches using said furanone.

The use of certain attractants for insects is known e.g. maltol and ethyl maltol (Japanese patent 52-38024); alcohols, aldehydes and lactones in plant extracts (Japanese patent 52-82729); and extracts of maple, birch and yeast (Japanese patent 42-82728). These substances however have shown low activity and had to be used in high concentrations.

In addition, Japanese patent 56-133201 discloses the use of derivatives of furanone, namely 3-hydroxy-4-methyl-2(5H)-furanone; 3-hydroxy-4,5-dimethyl-2(5H)-furanone and 5-ethyl-3-hydroxy-4-methyl-2 (5H)-furanone as insect attractants. These compounds are chemically related to the furanone of the present invention, but are sufficiently different that their activity is not predictable biologically. It has, in this regard, been found that the attractancy of the furanone of this invention is greatly superior to the prior art furanone derivatives for cockroaches.

It is further known from United States Patent Number 4,447,447 to make a composition to guard the leaves of trees from infestation and eating by gypsy moth larvae. It is known that the larvae ascend the tree trunk at night to eat the leaves and descend to spend the day on the cooler ground. It is taught in the patent 4,447,447 to form a composition containing an aliphatic aldehyde having 2 to 7 carbon atoms; an organic sulfide, disulfide or mercaptan with from 1 to 14 carbon atoms; a diketo furan; a carboxylic acid of 1 to 14 carbon atoms; in a solvent, e.g. soybean oil or benzyl alcohol and optionally mixed with petroleum jelly. The composition is spread around the tree trunk as a band of material. It is said in the patent that the composition is effective in preventing the gypsy moth larvae from ascending the tree trunk because of its odor "but the actual mechanism has not been definitely established." Thus, while furaneol is one of the diketo furan ingredients of the composition, and is the furanone of the present invention, it is clearly not taught that furaneol would be an attractant when used alone, since the composition of the patent is clearly intended to be and is acting as a repellant.

It has now been surprisingly found that the furanone derivative of formula I is an attractant for cockroaches. The furanone compound used according to the present invention has the following general formula

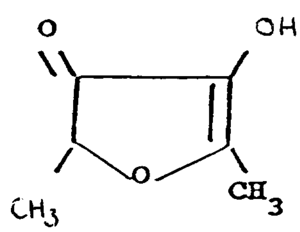

It is called 4-hydroxy-2,5-dimethyl-3-(2H) furanone (brief designation: furaneol). This compound is a potent attractant of insect pests and highly superior attractants for cockroaches.

The furanone derivative of the present invention may be used alone as an insect attractant, or may be prepared in the form of a solution or suspension in a suitable medium, or be mixed with or absorbed on a suitable carrier, or diluent. Additives, such as an emulsifier, a dispersing agent, a suspending agent, a spreader, or a stabilizer including antioxidants such as BHT and BHA may be used. The composition may be in the form of an oil, an emulsion, a hydrate, a powder, granules, tablets or microcapsules.

The terms attractant and bait have been widely used in the pesticidal art, and at times have been used interchangeably. As used in the present case, bait means a combination of a food and a pesticide, where inert ingredients may also be present to affect the physical consistency of the bait and its palatability to insects. The object is to induce insects to eat the bait so as to ingest the poison which acts within the insect to kill it. Insects can find the bait, but it does not necessarily attract them to its location.

An attractant is a chemical substance that actually attracts insects, over a distance, to the point where the attractant is located. It could be called a lure, a homing signal or a beacon.

Exemplary bait compositions are disclosed in U.S. Patents 4,049,460 and 4,514,960. Examples of poisons are disclosed in U.S. Patents 40,87,525 and 4,163,102. Suitable bait feeding stations are disclosed in U.S. Patent 4,563,836 or D278,842.

It will of course be understood that the above are only exemplary.

An exemplary poisoned bait is a solid non-particulate, non-flowable, non-repellant, fully edible insecticide-bait composition, comprising a pentadienone hydrazone insecticide compound, a specific food attractant system, and a binder. A preservative is optionally added to the composition.

Pentadiene-3-one substituted amidinohydrazones are described by Tomcufcik, U.S. Patent 3,878,201, as antimalarial and anti-tubercular agents. Lovell, U.S. Patent 4,087,525 and 4,163,102 - the disclosures of which are incorporated by reference thereto, describes the use of these compounds as insecticides. The insecticide compounds of the Lovell patents are generally represented by the formula:

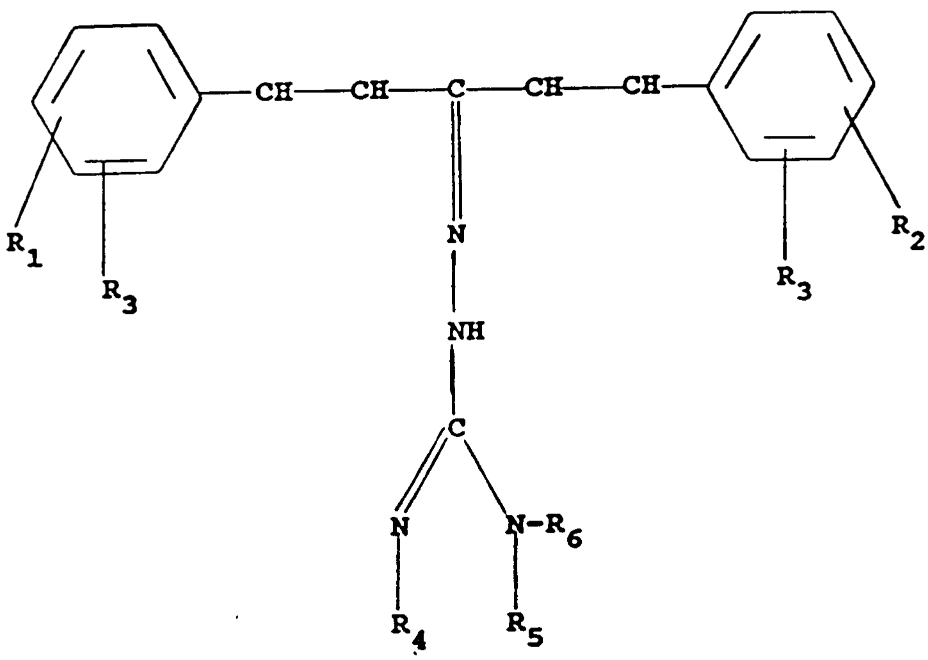

(I)

wherein $R_1$ and $R_2$ each represent hydrogen, halogen, the group $-CF_3$, $C_1$-$C_4$ alkyl, $C_1$-$C_4$ alkoxy, or $C_1$-$C_4$ alkylthio; $R_3$ is hydrogen or methyl, provided that when $R_3$ is methyl both $R_1$ and $R_2$ are also methyl; $R_4$ and $R_5$ represent hydrogen, $C_1$-$C_4$ alkyl or, when taken together, an alkylene group of 2 to 6 carbon or 1,2-cyclohexylene; $R_6$ is hydrogen or $C_1$-$C_4$ alkyl; and salts thereof.

Particularly useful compounds are those represented by the formula:

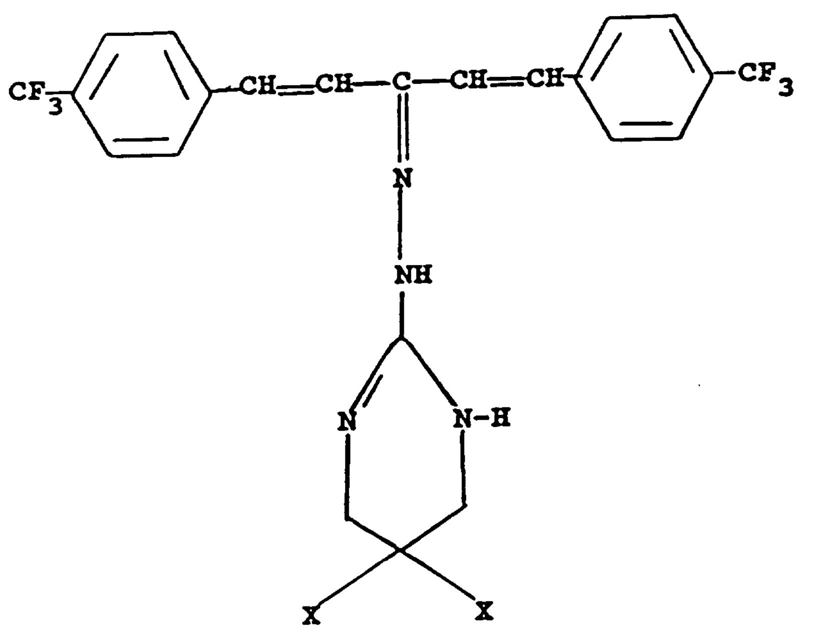

(II)

wherein X is hydrogen or methyl, e.g. the compound 1,5-bis($\alpha$, $\alpha$, $\alpha$-trifuloro-p-tolyl)-1,4-pentadien-3-one (1,4,5,6-tetrahydro-5,5-dimethyl-2-pyrimidinyl)hydrazone. Wherein the group X is formula (II) are each methyl.

The insect attractant of the present invention may be used with the hydrazones previously described above or may be used with organophosphorus insecticides, carbamate type insecticides, pyrethroid type insecticides, hydrazone type insecticides, and the like, or a combination of insecticides. Some examples of commercial products which may be used are BAYGON (a carbamate); DURSBAN and DIAZONON (organophosphates); PYRETHRIN (a natural pyrethroid); SUMITHRIN, TETRAMETHRIN, d-TRANS ALLETHRIN, and SBIO ALLETHRIN (synthetic pyrethroids). These insecticides may be incorporated in a bait that is a food substance which is intended to be eaten by the roaches, whereby the roaches also ingest the insecticide. The type of bait may be any which has been found to be palatable to roaches, such as described in United States Patent Numbers 4,049,460 and 4,514,960 and EP application number 88104250.

The insect attractant may also be combined with insect hormone (e.g., juvenile hormone), chemical antifertility agents, other attractants (pheromone, sexual and feeding attractants), perfumes and antifungal agents.

The techniques for the use of the attractant also include inducing the pest to enter a trap which does not allow escape, leading the pest to an adhesive (paste), combining with insecticide as indicated earlier, and combining with antifertility agents and juvenile hormones that reduce the population density of the insects.

The furanone attractant of the present invention may also be used in a feeding station such as disclosed in U. S. Patent 4,563,836 or D278,842. Such feeding stations have a base and cover with a solid bait placed in the center of the base and openings around the periphery of the base. The attractant may be mixed in the bait. Alternatively, the attractant may be deposited on the inner surface of the cover at the center thereof. It is advantage when the attractant is separate from the bait to mix it with an inert material that will adhere well to the surface of the cover. e.g. carbowax, or to impregnate paper or the like with a solution of the attractant which is then affixed to the cover.

The furanone attractant will generally be used as a 1 to 25% organic solvent solution, preferably 15% where the organic solvent is a lower glycol or acetone, e.g. propylene glycol. However, the furanone attractant can be solubilized by other solvents such as isopropanol (alcohols) or butyl carbitol (glycol ethers). When this solution is added to a bait, the amount of solution is from 0.01% to 10% of the total weight of the bait and attractant. The bait composition also comprises 0.1 to 3% pesticide and 87 to 99% food and inert ingredients, with the preferred range being 0.1% attractant, 2% pesticide and 97.9% food and inert ingredients.

The efficacy of the attractant is described in the following examples.

## EXAMPLE I

### 4-Hydroxy-2,5-dimethyl-3(2H) furanone (furaneol)

Furaneol was first screened as a cockroach attractant. A total weight of 0.10 grams of furaneol was placed onto Whatmann #1 filter paper, then placed into a petri dish. The petri dish was placed into a nalgene tank 2'x 2' x 2.5' 2.54 x 2.54 x 1.27 cms containing three cockroach harbourages, each representing a random population of American roaches. Food, harbourage and water were available to the roaches. Visual observation of the roaches activity was conducted for a sixty minute period. Furaneol caused increased roach activity for the length of the observation.

Further attractancy testing was conducted on Furaneol. One gram was placed onto Whatmann #1 filter paper, then placed into a greased, thirty-two ounce, wide mouth jar. A blank piece of filter paper was placed into the same type jar as a control. Both jars were placed at opposite corners of a 2.54 x 2.54 x 1.27 cms 2'x 2'x 2.5' nalgene tank containing three harborages that represented a random population of American roaches. Food, harborage and water were available to the roaches. The jars remained in the tank overnight and a count of trapped roaches was made the following day. In each of three trials, there was a significant increase in roaches trapped in the jar containing furaneol. In the above series of tests, a commercially available attractant, sotolon, was also tested. Furaneol surpassed sotolon in efficacy.

## EXAMPLE II

Tests were conducted to determine the level at which Furaneol should be incorporated into placebo COMBAT® bait, a commercially available bait, (essentially as described in copending, commonly assigned

application serial number 933,331) for field testing. The following bait compositions were made, incorporating furaneol as an attractant in the amounts of 1.5, 1.875, 2.5, 3.75, 7.5%, and no furaneol as a control.

BAIT

A COMBAT® + 1.5% furaneol
B COMBAT® + 1.875
C COMBAT® + 2.5
D COMBAT® + 3.75
E COMBAT® + 7.5
F COMBAT®

In testing of the above baits, it was found that the attractancy of furaneol was effective in all of the above bait compositions.

EXAMPLE III - V

Primary Field Testing for Furaneol Attractant

OBJECTIVE - To determine field efficacy of furaneol as a cockroach attractant. The amount of furaneol used in the baits was set at 7.5%.

METHODS - Sampling was conducted using paired jar trapping, with one jar containing blank COMBAT® bait and the other containing COMBAT® bait plus 7.5% furaneol attractant. Jars were place 18 inches (45.7 cm) to 24 inches (61 cm) apart, and left overnight in a suitable habitat. Captured cockroaches were counted, with age and sex noted, and released. Fresh baits were placed in the jars and the position reversed for the second night trapping. Catch was tallied in a similar manner for the second night. Baits were freshly made before each of the first two sampling periods so that the first day utilized one day old bait and the second night evaluated two day old baits. The third evaluation used two week old baits. Testing was conducted both indoors and outdoors.

Testing was conducted in a housing development in Alabama, and housing in Virginia.

EXAMPLE III

RESULTS - Furaneol attracted more individual cockroaches than the standard bait in 41 of 49 pairs of traps in Alabama. The results are shown in TABLE I. Species included the following:

TABLE I

*Periplaneta fuliginosa* - The Smokybrown Cockroach

| Sex/Age | Furaneol | COMBAT® | Difference |
|---|---|---|---|
| Males | 82 | 59 | 1.4x |

| | | | |
|---|---|---|---|
| Females | 40 | 25 | 1.6x |
| Nymphs | 98 | 52 | 1.9x |
| TOTAL | 220 | 136 | 1.6X |

Periplaneta americana - The American Cockroach

| Sex/Age | Furaneol | COMBAT® | Difference |
|---|---|---|---|
| Males | 2 | 1 | 2.0x |
| Females | 16 | 8 | 2.0x |
| Nymphs | 4 | 2 | 2.0x |
| TOTAL | 22 | 11 | 2.0x |

Blattella germanica - The German Cockroach

| Sex/Age | Furaneol | COMBAT® | Difference |
|---|---|---|---|
| Males | 10 | 3 | 3.3x |
| Females | 14 | 0 | xxxx |
| Nymphs | 24 | 1 | 24.0x |
| TOTAL | 48 | 4 | 12.0x |

EXAMPLE IV

At Virginia in the feed room of a poultry research facility, furaneol attracted more individual cockroaches in 13 of 15 pairs of traps. See Table II.

TABLE II

| Blatta orientalis - The Oriental Cockroach | | | |
|---|---|---|---|
| Sex/Age | Furaneol | COMBAT® | Difference |
| Males | 19 | 4 | 4.8x |
| Females | 42 | 3 | 14.0x |
| Nymphs | 437 | 92 | 4.8x |
| TOTAL | 498 | 99 | 5.0x |

EXAMPLE V

At Virginia in basements of public housing units, furaneol attracted more individual cockroaches in 19 of 23 comparisons. See Table III.

TABLE III

| Periplaneta americana - The American Cockroach | | | |
|---|---|---|---|
| Sex/Age | Furaneol | COMBAT® | Difference |
| Males | 35 | 7 | 5.0x |
| Females | 55 | 19 | 2.9x |
| Nymphs | 79 | 59 | 1.3x |
| TOTAL | 169 | 85 | 2.0x |

EXAMPLE VI

At Alabama, baits aged for two weeks and tested in a similar manner to the preceding Examples I through V showed furaneol to be more attractive in 5 of 6 paired comparisons. See Table IV.

TABLE IV

| Periplaneta fuliginosa - The Smokybrown Cockroach | | | |
|---|---|---|---|
| Sex/Age | Furaneol | COMBAT® | Difference |
| Males | 20 | 12 | 1.7x |
| Females | 21 | 11 | 1.9x |
| Nymphs | 57 | 34 | 1.7x |
| TOTAL | 98 | 57 | 1.7x |

In the following Examples 3 milligrams and 10 milligrams of furaneol was applied to the inner dimple of bait trays of the type as shown in U.S. Patent D278,842.

EXAMPLE VII

A field study for American cockroaches was conducted in Gainesville, Florida using trays with bait (no attractant) versus trays with attractant plus bait. The results are shown in Table V.

TABLE V

| | Combat® | Combat® Plus Furaneol - 3mg. |
|---|---|---|
| Adults | 5 | 39 |
| Nymphs | 1 | 0 |
| TOTAL | 6 | 39 |

| | Combat® | Combat® Plus Furaneol - 10mg |
|---|---|---|
| Adults | 4 | 206 |
| Nymphs | 1 | 39 |
| TOTAL' | 5 | 245 |

EXAMPLE VI

A field study for German cockroaches was conducted in Tampa, Florida as described in Example VII. The results are shown in Table VI.

TABLE VI

| | Combat® | Combat® Plus Furaneol - 3mg |
|---|---|---|
| TOTAL | 9 | 115 |
| | Combat® | Combat® Plus Furaneol - 10mg |
| TOTAL | 24 | 159 |

EXAMPLE VII

In Table VII below the attractancy activity of furaneol is compared with Sotolon a close structurally related compound of the prior art, as described above (Japanese Patent 56-133201).

TABLE VII

| Attractant Compound | Insects Trapped: Attractant | Insects Trapped: Control |
| --- | --- | --- |
| 4-hydroxy-2,5-dimethyl-3-(2H) furanone (furaneol) | 44 | 5 |
| 3-hydroxy-4,5-dimethyl-2(5H)-furanone (Sotolon) | 2 | 0 |

## Claims

1. The use of 4-hydroxy-2,5-dimethyl-3-(2H)furanone as a cockroach attractant.

2. The use as claimed in claim 1 characterised in that the attractant is associated with an inert diluent.

3. The use as claimed in claim 1 characterised in that the attractant is used as an organic solution, in a concentration of 1 to 25%.

4. The use as claimed in any of claims 1-3 characterised in that the attractant is used in combination with an insecticide.

5. The use as claimed in claim 4 characterised in that the insecticide is a pentadienone hydrazone.

6. The use as claimed in any of claims 1-4 characterised in that the attractant and insecticide are incorporated with a bait.

7. A method of treating an area to attract cockroaches wherein there is applied to the area 4-hydroxy-2,5-dimethyl-3(2H)furanoneas an attractant optionally with an insecticide and optionally with a bait.

8. An attractant for cockroaches which comprises the furanone derivative defined in claim 1, an inert diluent and an insecticide.

9. A composition as claimed in claim 8 characterised in that the insecticide is a pentadienone hydrazone.

10. An attractant, insecticidal bait composition including the attractant defined in claim 1, an insecticide and a bait.

11. A system for destroying cockroaches comprising a feeding station with a base and a cover and openings around the periphery of said station, a poisoned bait in said feeding station and an attractant as defined in claim 1 within said feeding station.

12. A system as claimed in claim 11 characterised in that said attractant is a part of the bait.

13. A system as claimed in claim 11 characterised in that said attractant is a part of the feeding station.

14. A system for destroying cockroaches which comprises the attractant defined in claim 1 associated with a trap.

15. A system for destroying cockroaches which comprises the composition of claim 8 in a aerosol package.

**Patentansprüche**

1. Verwendung von 4-Hydroxy-2,5-dimethyl-3-(2H)furanon als Schabenlockstoff.

2. Verwendung nach Anspruch 1, dadurch **gekennzeichnet,** daß der Lockstoff mit einem inerten Verdünnungsmittel assoziiert ist.

3. Verwendung nach Anspruch 1, dadurch **gekennzeichnet,** daß der Lockstoff als organische Lösung in einer Konzentration von 1 bis 25% verwendet wird.

4. Verwendung nach einem der Ansprüche 1-3, dadurch **gekennzeichnet,** daß der Lockstoff kombiniert mit einem Insektizid verwendet wird.

5. Verwendung nach Anspruch 4, dadurch **gekennzeichnet,** daß das Insektizid ein Pentadienonhydrazon ist.

6. Verwendung nach einem der Ansprüche 1-4, dadurch **gekennzeichnet,** daß der Lockstoff und das Insektizid in einen Köder eingearbeitet sind.

7. Verfahren zur Behandlung einer Fläche, um Schaben anlocken, dadurch **gekennzeichnet,** daß auf die Fläche 4-Hydroxy-2,5-dimethyl-3(2H)furanon als Lockstoff, gegebenenfalls zusammen mit einem Insektizid und gegebenenfalls mit einem Köder, angewendet wird.

8. Lockstoff für Schaben, dadurch **gekennzeichnet,** daß er ein Furanonderivat nach Anspruch 1, ein inertes Verdünnungsmittel und ein Insektizid enthält.

**9.** Zusammensetzung nach Anspruch 8, dadurch **gekennzeichnet,** daß das Insektizid ein Pentadienonhydrazon ist.

**10.** Insektizide Lockstoffköderzusammensetzung, dadurch **gekennzeichnet,** daß sie den Lockstoff, der in Anspruch 1 definiert wurde, ein Insektizid und einen Köder enthält.

**11.** System für die Vernichtung von Schaben, dadurch **gekennzeichnet,** daß es eine Futterstation mit einem Grundteil und einem Deckel und Öffnungen um die Peripherie der Station herum, einen vergifteten Köder in der genannten Futterstation und einen Lockstoff, wie er in Anspruch 1 definiert wurde, innerhalb der Futterstation umfaßt.

**12.** System nach Anspruch 11, dadurch **gekennzeichnet,** daß der Lockstoff ein Teil des Köders ist.

**13.** System nach Anspruch 11, dadurch **gekennzeichnet,** daß der Lockstoff ein Teil der Futterstation ist.

**14.** System für die Vernichtung von Schaben, dadurch **gekennzeichnet,** daß der in Anspruch 1 definierte Lockstoff mit einer Falle assoziiert ist.

**15.** System für die Vernichtung von Schaben, dadurch **gekennzeichnet,** daß es die Zusammensetzung nach Anspruch 8 in einer Aerosolverpackung umfaßt.

**Revendications**

**1.** L'utilisation de la 4-hydroxy-2,5-diméthyl-3(2H)furannone comme attractif pour les blattes.

**2.** L'utilisation selon la revendication 1, caractérisée en ce que l'attractif est associé à un diluant inerte.

**3.** L'utilisation selon la revendication 1, caractérisée en ce que l'attractif est utilisé sous forme d'une solution organique à une concentration de 1 à 25 %.

**4.** L'utilisation selon l'une quelconque des revendications 1 à 3, caractérisée en ce que l'attractif est utilisé en combinaison avec un insecticide.

**5.** L'utilisation selon la revendication 4, caractérisée en ce que l'insecticide est une pentadiénone-hydrazone.

**6.** L'utilisation selon l'une quelconque des revendications 1 à 4, caractérisée en ce que l'attractif et l'insecticide sont incorporés à un appât.

**7.** Un procédé de traitement d'une zone pour attirer les blattes, dans lequel on applique à la zone de la 4-hydroxy-2,5-diméthyl-3(2H)furannone comme attractif, éventuellement avec un insecticide et éventuellement avec un appât.

**8.** Un attractif pour les blattes qui comprend le dérivé de furannone défini dans la revendication 1, un diluant inerte et un insecticide.

**9.** Une composition selon la revendication 8, caractérisée en ce que l'insecticide est une pentadiénone-hydrazone.

**10.** Une composition d'appât attractif insecticide comprenant l'attractif défini dans la revendication 1, un insecticide et un appât.

**11.** Un système pour détruire les blattes, comprenant un poste d'alimentation avec une base et un couvercle et des ouvertures dans le pourtour dudit poste, un appât empoisonné dans ledit poste d'alimentation et un attractif comme défini dans la revendication 1 dans ledit poste d'alimentation.

**12.** Un système selon la revendication 11, caractérisé en ce que ledit attractif fait partie de l'appât.

**13.** Un système selon la revendication 11, caractérisé en ce que ledit attractif fait partie du poste d'alimentation.

**14.** Un système pour détruire les blattes qui comprend l'attractif défini dans la revendication 1 associé à un piège.

**15.** Un système pour détruire les blattes qui comprend la composition de la revendication 8 dans un emballage pour aérosol.